# EUROPEAN PATENT SPECIFICATION

(11) **EP 2 106 449 B1**
(45) Date of publication and mention of the grant of the patent: **19.09.2012**
(21) Application number: 08707941.4
(22) Date of filing: 16.01.2008
(51) Int. Cl.: C12P 19/16, C12N 9/44, A23L 1/0522, A23L 1/09, A23L 1/216

(54) **METHOD FOR PRODUCING POTATO PRODUCTS**
VERFAHREN ZUR HERSTELLUNG VON KARTOFFELPRODUKTEN
PROCEDE DE FABRICATION DE PRODUITS DE POMME DE TERRE

(30) Priority: 18.01.2007 EP 07100726
(43) Date of publication of application: 07.10.2009
(73) Proprietor: Novozymes A/S, 2880 Bagsvaerd (DK)
(72) Inventor: KALUM, Lisbeth, DK-3500 Vaerloese (DK); ERNST, Steffen, DK-2700 Broenshoej (DK)
(86) International application number: PCT/EP2008/050462
(87) International publication number: WO 2008/087164

(56) References cited:
- WO-A-2005/025327
- GORMLEY RONAN ET AL: "Effects of boiling, warm-holding, mashing and cooling on the levels of enzyme-resistant potato starch" INTERNATIONAL JOURNAL OF FOOD SCIENCE AND TECHNOLOGY, vol. 34, no. 3, June 1999 (1999-06), pages 281-286, XP002488435 ISSN: 0950-5423
- GARCIA-ALONSO A ET AL: "EFFECT OF PROCESSING ON POTATO STARCH: IN VITRO AVAILABILITY AND GLYCAEMIC INDEX" STARKE - STARCH, WILEY-VCH VERLAG, WEINHEIM, DE, vol. 52, no. 2/03, 1 March 2000 (2000-03-01), pages 81-84, XP000924207 ISSN: 0038-9056

### SEQUENCE LISTING

<110> Novozymes A/S
<120> Method for producing potato products
<130> 11016
<160> 2
<170> PatentIn version 3.4
<210> 1
   <211> 829
   <212> PRT
   <213> Bacillus acidopullulyticus
<400> 1
   Asp Ser Thr Ser Thr Glu Val Ile Val His Tyr His Arg Phe Asp Ser
   1               5                   10                  15
   Asn Tyr Ala Asn Trp Asp Leu Trp Met Trp Pro Tyr Gln Pro Val Asn
               20                  25                  30
   Gly Asn Gly Ala Ala Tyr Glu Phe Ser Gly Lys Asp Asp Phe Gly Val
           35                  40                  45
   Lys Ala Asp Val Gln Val Pro Gly Asp Asp Thr Gln Val Gly Leu Ile
       50                  55                  60
   Val Arg Thr Asn Asp Trp Ser Gln Lys Asn Thr Ser Asp Asp Leu His
   65                  70                  75                  80
   Ile Asp Leu Thr Lys Gly His Glu Ile Trp Ile Val Gln Gly Asp Pro
                   85                  90                  95
   Asn Ile Tyr Tyr Asn Leu Ser Asp Ala Gln Ala Ala Ala Thr Pro Lys
               100                 105                 110
   Val Ser Asn Ala Tyr Leu Asp Asn Glu Lys Thr Val Leu Ala Lys Leu
           115                 120                 125
   Thr Asn Pro Met Thr Leu Ser Asp Gly Ser Ser Gly Phe Thr Val Thr
       130                 135                 140
   Asp Lys Thr Thr Gly Glu Gln Ile Pro Val Thr Ala Ala Thr Asn Ala
   145                 150                 155                 160
   Asn Ser Ala Ser Ser Ser Glu Gln Thr Asp Leu Val Gln Leu Thr Leu
                   165                 170                 175
   Ala Ser Ala Pro Asp Val Ser His Thr Ile Gln Val Gly Ala Ala Gly
               180                 185                 190
   Tyr Glu Ala Val Asn Leu Ile Pro Arg Asn Val Leu Asn Leu Pro Arg
           195                 200                 205
   Tyr Tyr Tyr Ser Gly Asn Asp Leu Gly Asn Val Tyr Ser Asn Lys Ala
       210                 215                 220
   Thr Ala Phe Arg Val Trp Ala Pro Thr Ala Ser Asp Val Gln Leu Leu
   225                 230                 235                 240
   Leu Tyr Asn Ser Glu Thr Gly Pro Val Thr Lys Gln Leu Glu Met Gln
                   245                 250                 255
   Lys Ser Asp Asn Gly Thr Trp Lys Leu Lys Val Pro Gly Asn Leu Lys
               260                 265                 270
   Asn Trp Tyr Tyr Leu Tyr Gln Val Thr Val Asn Gly Lys Thr Gln Thr
           275                 280                 285
   Ala Val Asp Pro Tyr Val Arg Ala Ile Ser Val Asn Ala Thr Arg Gly
       290                 295                 300
   Met Ile Val Asp Leu Glu Asp Thr Asn Pro Pro Gly Trp Lys Glu Asp
   305                 310                 315                 320
   His Gln Gln Thr Pro Ala Asn Pro Val Asp Glu Val Ile Tyr Glu Val
                   325                 330                 335
   His Val Arg Asp Phe Ser Ile Asp Ala Asn Ser Gly Met Lys Asn Lys
               340                 345                 350
   Gly Lys Tyr Leu Ala Phe Thr Glu His Gly Thr Lys Gly Pro Asp Asn
           355                 360                 365
   Val Lys Thr Gly Ile Asp Ser Leu Lys Glu Leu Gly Ile Asn Ala Val
       370                 375                 380
   Gln Leu Gln Pro Ile Glu Glu Phe Asn Ser Ile Asp Glu Thr Gln Pro
   385                 390                 395                 400
   Asn Met Tyr Asn Trp Gly Tyr Asp Pro Arg Asn Tyr Asn Val Pro Glu
                   405                 410                 415
   Gly Ala Tyr Ala Thr Thr Pro Glu Gly Thr Ala Arg Ile Thr Gln Leu
               420                 425                 430
   Lys Gln Leu Ile Gln Ser Ile His Lys Asp Arg Ile Ala Ile Asn Met
           435                 440                 445
   Asp Val Val Tyr Asn His Thr Phe Asn Val Gly Val Ser Asp Phe Asp
       450                 455                 460
   Lys Ile Val Pro Gln Tyr Tyr Tyr Arg Thr Asp Ser Ala Gly Asn Tyr
   465                 470                 475                 480
   Thr Asn Gly Ser Gly Val Gly Asn Glu Ile Ala Thr Glu Arg Pro Met
                   485                 490                 495
   Val Gln Lys Phe Val Leu Asp Ser Val Lys Tyr Trp Val Lys Glu Tyr
               500                 505                 510
   His Ile Asp Gly Phe Arg Phe Asp Leu Met Ala Leu Leu Gly Lys Asp
           515                 520                 525
   Thr Met Ala Lys Ile Ser Lys Glu Leu His Ala Ile Asn Pro Gly Ile
       530                 535                 540
   Val Leu Tyr Gly Glu Pro Trp Thr Gly Gly Thr Ser Gly Leu Ser Ser
   545                 550                 555                 560
   Asp Gln Leu Val Thr Lys Gly Gln Gln Lys Gly Leu Gly Ile Gly Val
                   565                 570                 575
   Phe Asn Asp Asn Ile Arg Asn Gly Leu Asp Gly Asn Val Phe Asp Lys
               580                 585                 590
   Ser Ala Gln Gly Phe Ala Thr Gly Asp Pro Asn Gln Val Asn Val Ile
           595                 600                 605
   Lys Asn Arg Val Met Gly Ser Ile Ser Asp Phe Thr Ser Ala Pro Ser
       610                 615                 620
   Glu Thr Ile Asn Tyr Val Thr Ser His Asp Asn Met Thr Leu Trp Asp
   625                 630                 635                 640
   Lys Ile Ser Ala Ser Asn Pro Asn Asp Thr Gln Ala Asp Arg Ile Lys
                   645                 650                 655
   Met Asp Glu Leu Ala Gln Ala Val Val Phe Thr Ser Gln Gly Val Pro
               660                 665                 670
   Phe Met Gln Gly Gly Glu Glu Met Leu Arg Thr Lys Gly Gly Asn Asp
           675                 680                 685
   Asn Ser Tyr Asn Ala Gly Asp Ser Val Asn Gln Phe Asp Trp Ser Arg
       690                 695                 700
   Lys Ala Gln Phe Glu Asn Val Phe Asp Tyr Tyr Ser Trp Leu Ile His
   705                 710                 715                 720
   Leu Arg Asp Asn His Pro Ala Phe Arg Met Thr Thr Ala Asp Gln Ile
                   725                 730                 735
   Lys Gln Asn Leu Thr Phe Leu Asp Ser Pro Thr Asn Thr Val Ala Phe
               740                 745                 750
   Glu Leu Lys Asn His Ala Asn His Asp Lys Trp Lys Asn Ile Ile Val
           755                 760                 765
   Met Tyr Asn Pro Asn Lys Thr Ala Gln Thr Leu Thr Leu Pro Ser Gly
       770                 775                 780
   Asn Trp Thr Ile Val Gly Leu Gly Asn Gln Val Gly Glu Lys Ser Leu
   785                 790                 795                 800
   Gly His Val Asn Gly Thr Val Glu Val Pro Ala Leu Ser Thr Ile Ile
                   805                 810                 815
   Leu His Gln Gly Thr Ser Glu Asp Val Ile Asp Gln Asn
               820                 825
<210> 2
   <211> 969
   <212> PRT
   <213> Bacillus acidopullulyticus with CBM
<400> 2
   Met Ser Leu Ile Arg Ser Arg Tyr Asn His Phe Val Ile Leu Phe Thr
   1               5                   10                  15
   Val Ala Ile Met Phe Leu Thr Val Cys Phe Pro Ala Tyr Lys Ala Leu
               20                  25                  30
   Ala Asp Ser Thr Ser Thr Glu Val Ile Val His Tyr His Arg Phe Asp
           35                  40                  45
   Ser Asn Tyr Ala Asn Trp Asp Leu Trp Met Trp Pro Tyr Gln Pro Val
       50                  55                  60
   Asn Gly Asn Gly Ala Ala Tyr Glu Phe Ser Gly Lys Asp Asp Phe Gly
   65                  70                  75                  80
   Val Lys Ala Asp Val Gln Val Pro Gly Asp Asp Thr Gln Val Gly Leu
                   85                  90                  95
   Ile Val Arg Thr Asn Asp Trp Ser Gln Lys Asn Thr Ser Asp Asp Leu
               100                 105                 110
   His Ile Asp Leu Thr Lys Gly His Glu Ile Trp Ile Val Gln Gly Asp
           115                 120                 125
   Pro Asn Ile Tyr Tyr Asn Leu Ser Asp Ala Gln Ala Ala Ala Thr Pro
       130                 135                 140
   Lys Val Ser Asn Ala Tyr Leu Asp Asn Glu Lys Thr Val Leu Ala Lys
   145                 150                 155                 160
   Leu Thr Asn Pro Met Thr Leu Ser Asp Gly Ser Ser Gly Phe Thr Val
                   165                 170                 175
   Thr Asp Lys Thr Thr Gly Glu Gln Ile Pro Val Thr Ala Ala Thr Asn
               180                 185                 190
   Ala Asn Ser Ala Ser Ser Ser Glu Gln Thr Asp Leu Val Gln Leu Thr
           195                 200                 205
   Leu Ala Ser Ala Pro Asp Val Ser His Thr Ile Gln Val Gly Ala Ala
       210                 215                 220
   Gly Tyr Glu Ala Val Asn Leu Ile Pro Arg Asn Val Leu Asn Leu Pro
   225                 230                 235                 240
   Arg Tyr Tyr Tyr Ser Gly Asn Asp Leu Gly Asn Val Tyr Ser Asn Lys
                   245                 250                 255
   Ala Thr Ala Phe Arg Val Trp Ala Pro Thr Ala Ser Asp Val Gln Leu
               260                 265                 270
   Leu Leu Tyr Asn Ser Glu Thr Gly Pro Val Thr Lys Gln Leu Glu Met
           275                 280                 285
   Gln Lys Ser Asp Asn Gly Thr Trp Lys Leu Lys Val Pro Gly Asn Leu
       290                 295                 300
   Lys Asn Trp Tyr Tyr Leu Tyr Gln Val Thr Val Asn Gly Lys Thr Gln
   305                 310                 315                 320
   Thr Ala Val Asp Pro Tyr Val Arg Ala Ile Ser Val Asn Ala Thr Arg
                   325                 330                 335
   Gly Met Ile Val Asp Leu Glu Asp Thr Asn Pro Pro Gly Trp Lys Glu
               340                 345                 350
   Asp His Gln Gln Thr Pro Ala Asn Pro Val Asp Glu Val Ile Tyr Glu
           355                 360                 365
   Val His Val Arg Asp Phe Ser Ile Asp Ala Asn Ser Gly Met Lys Asn
       370                 375                 380
   Lys Gly Lys Tyr Leu Ala Phe Thr Glu His Gly Thr Lys Gly Pro Asp
   385                 390                 395                 400
   Asn Val Lys Thr Gly Ile Asp Ser Leu Lys Glu Leu Gly Ile Asn Ala
                   405                 410                 415
   Val Gln Leu Gln Pro Ile Glu Glu Phe Asn Ser Ile Asp Glu Thr Gln
               420                 425                 430
   Pro Asn Met Tyr Asn Trp Gly Tyr Asp Pro Arg Asn Tyr Asn Val Pro
           435                 440                 445
   Glu Gly Ala Tyr Ala Thr Thr Pro Glu Gly Thr Ala Arg Ile Thr Gln
       450                 455                 460
   Leu Lys Gln Leu Ile Gln Ser Ile His Lys Asp Arg Ile Ala Ile Asn
   465                 470                 475                 480
   Met Asp Val Val Tyr Asn His Thr Phe Asn Val Gly Val Ser Asp Phe
                   485                 490                 495
   Asp Lys Ile Val Pro Gln Tyr Tyr Tyr Arg Thr Asp Ser Ala Gly Asn
               500                 505                 510
   Tyr Thr Asn Gly Ser Gly Val Gly Asn Glu Ile Ala Thr Glu Arg Pro
           515                 520                 525
   Met Val Gln Lys Phe Val Leu Asp Ser Val Lys Tyr Trp Val Lys Glu
       530                 535                 540
   Tyr His Ile Asp Gly Phe Arg Phe Asp Leu Met Ala Leu Leu Gly Lys
   545                 550                 555                 560
   Asp Thr Met Ala Lys Ile Ser Lys Glu Leu His Ala Ile Asn Pro Gly
                   565                 570                 575
   Ile Val Leu Tyr Gly Glu Pro Trp Thr Gly Gly Thr Ser Gly Leu Ser
               580                 585                 590
   Ser Asp Gln Leu Val Thr Lys Gly Gln Gln Lys Gly Leu Gly Ile Gly
           595                 600                 605
   Val Phe Asn Asp Asn Ile Arg Asn Gly Leu Asp Gly Asn Val Phe Asp
       610                 615                 620
   Lys Ser Ala Gln Gly Phe Ala Thr Gly Asp Pro Asn Gln Val Asn Val
   625                 630                 635                 640
   Ile Lys Asn Gly Val Met Gly Ser Ile Ser Asp Phe Thr Ser Ala Pro
                   645                 650                 655
   Ser Glu Thr Ile Asn Tyr Val Thr Ser His Asp Asn Met Thr Leu Trp
               660                 665                 670
   Asp Lys Ile Ser Ala Ser Asn Pro Asn Asp Thr Gln Ala Asp Arg Ile
           675                 680                 685
   Lys Met Asp Glu Leu Ala Gln Ala Val Val Phe Thr Ser Gln Gly Val
       690                 695                 700
   Pro Phe Met Gln Gly Gly Glu Glu Met Leu Arg Thr Lys Gly Gly Asn
   705                 710                 715                 720
   Asp Asn Ser Tyr Asn Ala Gly Asp Ser Val Asn Gln Phe Asp Trp Ser
                   725                 730                 735
   Arg Lys Ala Gln Phe Glu Asn Val Phe Asp Tyr Tyr Ser Trp Leu Ile
               740                 745                 750
   His Leu Arg Asp Asn His Pro Ala Phe Arg Met Thr Thr Ala Asp Gln
           755                 760                 765
   Ile Lys Gln Asn Leu Thr Phe Leu Asp Ser Pro Thr Asn Thr Val Ala
       770                 775                 780
   Phe Glu Leu Lys Asn His Ala Asn His Asp Lys Trp Lys Asn Ile Ile
   785                 790                 795                 800
   Val Met Tyr Asn Pro Asn Lys Thr Ala Gln Thr Leu Thr Leu Pro Ser
                   805                 810                 815
   Gly Asn Trp Thr Ile Val Gly Leu Gly Asn Gln Val Gly Glu Lys Ser
               820                 825                 830
   Leu Gly His Val Asn Gly Thr Val Glu Val Pro Ala Leu Ser Thr Ile
           835                 840                 845
   Ile Leu His Gln Gly Thr Ser Glu Asp Val Ile Asp Gln Asn Pro Glu
       850                 855                 860
   Pro Thr Pro Glu Pro Asn Thr Ser Gln Ile Thr Phe Thr Val Asn Asn
   865                 870                 875                 880
   Ala Thr Thr Val Trp Gly Gln Asn Val Tyr Val Val Gly Asn Ile Ser
                   885                 890                 895
   Gln Leu Gly Asn Trp Asp Pro Val His Ala Val Gln Met Thr Pro Ser
               900                 905                 910
   Ser Tyr Pro Thr Trp Thr Val Thr Ile Pro Leu Leu Gln Gly Gln Asn
           915                 920                 925
   Ile Gln Phe Lys Phe Ile Lys Lys Asp Ser Ala Gly Asn Val Ile Trp
       930                 935                 940
   Glu Asp Ile Ser Asn Arg Thr Tyr Thr Val Pro Thr Ala Ala Ser Gly
   945                 950                 955                 960
   Ala Tyr Thr Ala Ser Trp Asn Val Pro
                   965

## Description

### Field of invention

The present invention relates to a method for increasing the content of resistant starch in a potato product.

### Background of the invention

Carbohydrates constitute one of the basic ingredients in the diet of many animals, e.g. in the diet of humans. Frequently the primary source for providing carbohydrate is starch, which is the main constituent of e.g. com, cereals, yarns, rice and potatoes. Starch is composed of two types of polysaccharide molecules, amylose, a mostly linear and flexible polymer of D-anhydroglucose units linked by alpha-1,4-D-glucosidic bonds, and amylopectin, a branched polymer of linear chains linked by alpha-1,6-D-glucosidic bonds. Starch is digested predominantly in the small intestine of most mammals by the enzyme alpha-amylase. Starch and starch containing products constitute a major source of energy and excessive consumption of starch or starch containing products may lead to weight gain and in severe cases obesity. Obesity is becoming a major problem for the human population throughout the world.

"Resistant starch" may be defined as starch that resists digestion and absorption in the small intestine of e.g. mammals. Ingested resistant starch passes into the large intestine where it is fermented by colonic microflora to short chain fatty acids, particularly butyrate, and gases. Resistant starch may be used in foods, including medical foods and dietary supplements, to maintain colonic health and mucosal integrity. Resistant starch is known as a prebiotic. Further, as it is not utilized until it reaches the large intestine where it is fermented to short chain fatty acids, resistant starch has a reduced caloric value. The reduction in available or glycemic carbohydrate in the small intestine has been linked to improved blood glucose and insulin control, with associated benefits for weight management. Research also indicates that resistant starches may contribute to maintaining a healthy immune system in humans.

Resistant starch may be produced from pure starch by e.g. enzymatic treatment, and a number of processes for increasing the rate of this transformation are known. Products containing resistant starch are known to retain physical properties and properties as regards taste, smell, texture and general appearance that are generally acceptable for consumers and for human consumption.

However, the enzymatic production of resistant starch has so far only proven successful using essentially pure starch as starting material as seen in US6929817 or in WO 2005/025327.

Furthermore it has been shown by Gormley R. et al.; International Journal of Food Science and Technology; vol. 34; no. 3; 281-286 that the content of resistant starch in potato products can be increased by warm-holding, slow cooling or multiple cook-cool.. Production of food products having an increased content of resistant starch using enzymatic processes "in situ" has so far not been reported. Accordingly, one object of the present invention was to provide food products having an increased content of resistant starch by using enzymatic processes in situ.

### Definitions

In the context of the present invention a "potato pre-product" means any product directly derived from raw potatoes by means of mechanical processes (e.g. washing and or peeling) and optionally treatment with heat and/or water or aqueous compositions (e.g. washing, cooking, blanching or steaming). In this context "directly derived" means only that the potato product has not been altered substantially with respect to constituents and ratios between constituents (with the exception of water, which may possibly be removed by drying or added by optional treatments with aqueous compositions as stated above) in comparison to constituents and ratios between constituents of the potato from which the potato pre-product according to the invention is derived. In one embodiment the "potato pre-product" may simply be washed raw potatoes. In the context of the present invention a "potato pre-product" may alternatively be defined as a product derived from potatoes which still retain the essential structures and composition of potatoes e.g. with regard to presence of cell walls visible by light microscopy. Thus "potato pre-products" may be defined as products wherein the majority of the potato pre-products comprise material consisting of cell walls and material situated within cell walls. Pure or essentially pure potato starch is not to be regarded as "potato pre-products" according to the invention. Production of such pure or essentially pure potato starch typically involves grinding or milling potatoes to disintegrate the cells and release the starch. Also, the constituents and ratios between constituents in such pure or essentially pure potato starch is typically different from the constituents and ratios between constituents of the potatoes from which it is derived, i.e. the content of starch is percentage-wise higher than in the potatoes.

In the context of the present invention a "potato product" means any potato product which may be obtained by treating a "potato pre-product" according to the present invention. Potato products may additionally have been subjected to other optional treatment steps such as mechanical treatment steps like cutting, mashing, molding, pressing. Other examples of further treatment steps include treatment steps like frying, deep-frying, par-frying, cooking, bleaching, baking and leaching to obtain the potato product. Suitable examples of potato products produced according to the invention are potato granules, potato flakes, sliced potato chips, fabricated potato chips, extruded potato snacks, ground or crushed dehydrated potato dice and slice pieces, french fries (sometimes also referred to as pommes frites), par-fried potato products, potato croquettes, potato nuggets, industrially pre-cooked potatoes, and mashed potato products such as cooled mashed potatoes and instant mashed potatoes. These examples include products that are not completely cooked (pre-cooked products) as well as finished products for direct consumption.

In the context of the present invention "in situ" means that the potato pre-products are processed enzymatically according to the invention as an integrated part of the process of converting the potato pre-products into potato products according to the invention.

In the context of the present invention "resistant starch" may be defined as a starch that resists digestion and absorption in the small intestine of e.g. mammals. Resistant starch (RS) may be classified into four categories depending on the causes of resistance. RS1 is a physically inaccessible starch due to entrapment of granules within a protein matrix or within a plant cell wall. RS2 is a granular starch that resists digestion by pancreatic alpha-amylase. RS3 is a retrograded, nongranular starch or starch food. RS4 is a resistant starch that has linkages other than alpha-1,4- and alpha-1,6-D-glucosidic bonds. Resistant starch in the context of the present invention includes, but is not limited to these four categories.

In the context of the present invention "debranching enzymes" are enzymes that hydrolyse alpha-1,6-glucosidic linkages in starch. The group comprises, e.g., "amylo-alpha-1,6-glucosidase" (EC 3.2.1.33), "Pullulanase" (EC 3.2.1.41), "Isoamylase" (EC 3.2.1.68) and "Limit dextrinase" (EC 3.2.1.142).

"Amylo-alpha-1,6-glucosidase" (EC 3.2.1.33) hydrolyses unsubstituted alpha-1,6-glucose residues that form branch points on an alpha-1,4-linked glucose chain. The enzyme activity found in mammals and yeast is in a polypeptide chain containing two active centres. The other activity is similar to that of 4-alpha-glucanotransferases (EC 2.4.1.25), which acts on the glycogen phosphorylase limit dextrin chains to expose the single glucose residues, which the 6-alpha-glucosidase activity can then hydrolyse. Other names of amylo-alpha-1,6-glucosidases are e.g. amylo-1,6-glucosidase, dextrin 6-alpha-D-glucosidase, amylopectin 1,6-glucosidase and dextrin-1,6-glucosidase. The systematic name is glycogen phosphorylase-limit dextrin alpha-1,6-glucohydrolase.

"Pullulanase" (EC 3.2.1.41) hydrolyses alpha-1,6-D-glucosidic linkages in pullulan (a linear polymer of alpha-1,6-linked maltotriose units) and in amylopectin and glycogen, and the alpha- and beta-limit dextrins of amylopectin and glycogen. Other name(s) of pullulanase are e.g amylopullulanase, amylopectin 6-glucanohydrolase; bacterial debranching enzyme; debranching enzyme; alpha-dextrin endo-1,6-alpha-glucosidase; R-enzyme. The systematic name is "pullulan alpha-1,6-glucanohydrolase". Enzymes belonging to this class may comprise a carbohydrate binding module (CBM).

"Isoamylase" (EC 3.2.1.68) hydrolyses alpha-1,6-glucosidic linkages in glycogen, amylopectin and their beta-limit dextrins. The systematic name is glycogen alpha-1,6-glucanohydrolase. Isoamylase differs from pullulanase (EC 3.2.1.41) and limit dextrinase (EC 3.2.1.142) by its inability to hydrolyse pullulan, and by limited action on alpha-limit dextrins. Maltose is the smallest sugar it can release from an alpha-1,6-linkage.

"Limit dextrinase" (EC 3.2.1.142) hydrolyse alpha-1,6-D-glucosidic linkages in alpha- and beta-limit dextrins of amylopectin and glycogen, and in amylopectin and pullulan. The systematic name is dextrin alpha-1,6-glucanohydrolase and other common names include R-enzyme; amylopectin-1,6-glucosidase.

A "catalytic starch debranching domain" is intended to mean a part of a debranching enzyme, which part is responsible for the catalytic activity of the complete enzyme. Thus a catalytic starch debranching domain may be a part of or the complete debranching enzyme.

"Carbohydrate binding domains" are protein structures capable of binding a carbohydrate, usually with non-covalent bindings. Carbohydrate binding domains include domains binding polysaccharides such as cellulose, xylan or starch. Several carbohydrate binding domains have been described in the literature, and have been grouped in families, for review see Boraston et al. (2004) Biochem. J. 382: 769-781 and http://afmb.cnrs-mrs.fr/CAZY/index.html for the grouping of CBM families.

A "starch binding domain" is a carbohydrate binding domain having specificity for starch, in particular raw starch. Starch binding domains are found in at least the carbohydrate binding domain families CBM-20, CBM-21, CBM-25, CBM-26, CBM-34, CBM-41 and CBM-45.

A "linker sequence" is a proteinaceous part separating, e.g., the catalytic starch debranching domain from the carbohydrate binding domain without interfering with the activity of the two domains.

### Short description of the invention

Surprisingly it has been shown during the course of the experiments leading to the present invention, that potato products having an increased content of resistant starch can be produced from potato pre-products using an enzymatic process. Particularly it has been shown that potato products having an increased content of resistant starch can be produced using enzymatic processes "in situ", meaning that the potato products produced according to the present invention are derived directly from potato pre-products, having essentially the composition of raw potatoes (with the possible exception of the content of water which may have been altered).

Accordingly the present invention relates to a method for increasing the content of resistant starch in a potato product said method comprising the steps of:
a. providing an aqueous composition comprising a potato pre-product,
b. adjusting the temperature of the composition of step a) to a temperature suitable for enzymatic treatment of the potato pre-product by debranching enzymes selected among pullulanase and isoamylase,
c. treating the composition with one or more debranching enzymes, and
d. holding the enzyme treated potato pre-product at a temperature of between -2 and 50°C.

Preferably, step d) is performed at a temperature and for a time period which induces formation of resistant starch in the enzyme treated potato pre-product, i.e. step d) is performed at a temperature and for a time period sufficient to increase the content of resistant starch in the enzyme treated potato pre-product.

In a preferred aspect, the enzyme treated potato pre-product is held at a temperature of between -2 and 30°C, such as at a temperature of between -2 and 10°C.

It is described a method for increasing the content of resistant starch in a potato product said method comprising the steps of:
a. providing an aqueous composition comprising a potato pre-product,
b. adjusting the temperature of the composition of step a) to a temperature suitable for enzymatic treatment of the potato pre-product by debranching enzymes,
c. treating the composition with one or more debranching enzymes, selected among pullulanase and isoamylase and
d. cooling the resulting potato product to a temperature of between -2 and 30°C, such as to a temperature of between -2 and 10°C.

In step d), the enzyme treated potato pre-product is held for a time period which induces formation of resistant starch in the enzyme treated potato pre-product, i.e. for a time period sufficient to increase the content of resistant starch in the enzyme treated potato pre-product. Preferentially, the treatment time in step d) is between 10 minutes and 20 hours.

The potato pre-product used in a method according to the present invention is preferably derived directly from raw potatoes.

It has been shown that an additional increase in the content of resistant starch in the potato product produced according to the invention can be obtained by a subsequent treatment step wherein the enzyme treated potato pre-product is heated in a second heating step.

It has been shown that an additional increase in the content of resistant starch in the potato product produced according to the invention can be obtained by a subsequent treatment step wherein the enzyme treated potato pre-product is frozen.

It has been shown that an additional increase in the content of resistant starch in the potato product produced according to the invention can be obtained by a subsequent treatment step wherein the enzyme treated potato pre-product is freeze-dried.

It has been shown that the increase in the content of resistant starch in the potato product produced according to the invention may be obtained by enzymatic treatment using debranching enzymes selected among pullulanase and isoamylase. In one embodiment, promising results were obtained using pullulanase. In one embodiment, promising results were obtained using isoamylase.

The potato product produced according to the invention may comprise between 4% and 60% resistant starch. Preferably the potato starch product produced according to the invention comprises more than 5% resistant starch. More preferably the potato starch product produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

In the context of the present invention, unless otherwise specified, a percentage-wise amount of resistant starch in a potato product is the percentage of the total amount of starch which is resistant starch. I.e., unless otherwise specified, a product comprising "more than 5% resistant starch" means a product wherein more than 5% of the total amount of starch in the product is resistant starch. For any potato product according to the present invention, the skilled person will know, or be able to find out by analysis, the total amount of starch as percentage of total dry matter. Therefore, if a person skilled in the art knows the percentage-wise amount of resistant starch, i.e. the percentage of total starch which is resistant starch, he/she will be able to calculate or estimate the amount of resistant starch as a percentage of the total dry matter. And vice-versa if a person skilled in the art knows the amount of resistant starch as a percentage of the total dry matter he/she will be able to calculate or estimate the percentage-wise amount of resistant starch, i.e. the percentage of total starch which is resistant starch.

### Detailed description of the invention

The present invention relates to a method for increasing the content of resistant starch in a potato product said method comprising the steps of providing an aqueous composition comprising the potato pre-product, adjusting the temperature of the provided composition to a temperature suitable for enzymatic treatment of the potato pre-product by debranching enzymes, treating the composition with one or more debranching enzymes selected among pullulanase and isoamylase and holding the enzyme treated potato pre-product at a temperature of between -2 and 50°C.

In a preferred embodiment the enzyme treated composition is cooled to a temperature of between -2 and 30°C and kept at such temperature for a time period sufficient to induce retrogradation, i.e. to induce formation of resistant starch. In a more preferred embodiment the composition is cooled to a temperature of between -2 and 10°C.

In the methods of the present invention, the potato may by of any variety and/or cultivar including, but not limited to Agata, Agria, Alex, Amadeus, Arno, Artana, Asparges, Asva, Atlantic, Balanse, Berber, Bintje, Burren, Calla, Carrera, Centennial Russet, Dali, Danva, Desiree, Ditta, Exempla, Exquisa, Fakse, Filea, Folva, Fontane ,Godiva, Green Mountain, Hamlet, Hanna, Hansa, Hela, Imperia, Inova, Jaerla, Jutlandia, Kardal, Kardent, Karida, Karnico, Kennebec, Kenva, King Edward, Kuras, Lady Rosetta, Laura, Liva, Marabel, Marion, Mercury, Milva Revelino, Minea, Nicola, Norchip, Norgold Russet "BC", Norland, Octavia, Oleva, Panda, Posmo, Primula, Producent, Raja, Raja Bonanza, Red Pontiac, Red Warba, Revelino, Russet Burbank , Sava, Sebago, Secura, Senator, Seresta, Shepody, Sibu, Sieglinde, Sirtema, Stefano, Superior, Sydens Dronning, Symfonia, Tertus, Timate, Tivoli, Torva, Ukama, Victoria, Vivaldi, and White Rose.

Preferably, the potato pre-product is derived directly from a raw potato.

A preferred potato product produced according to the invention may be a product selected among the group comprising potato granules, potato flakes, sliced potato chips, fabricated potato chips, extruded potato snacks, ground or crushed dehydrated potato dice and slice pieces, french fries (sometimes also referred to as pommes frites), par-fried potato products, potato croquettes, potato nuggets, industrially pre-cooked potatoes (e.g. vacuum packed chilled cooked potatoes), and mashed potato products such as cooled mashed potatoes and instant mashed potatoes.

Thus, in one embodiment the potato product consists of potato granules. Preferably the potato granule product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a potato granule product which has beneficial effects in that it contains more resistant starch than the previously known potato granule products.

In one embodiment the potato product consists of potato flakes. Preferably the potato flake product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a potato flake product which has beneficial effects in that it contains more resistant starch than the previously known potato flake products.

In one embodiment the potato product consists of ground dehydrated potato dice and slice pieces. Preferably the ground dehydrated potato dice and slice pieces produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiments provides a ground dehydrated potato dice and slice piece product which has beneficial effects in that it contains more resistant starch than the previously known ground dehydrated potato dice and slice piece products.

In one embodiment the potato product consists of crushed dehydrated potato dice and slice pieces. Preferably the crushed dehydrated potato dice and slice pieces produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiments provides a crushed dehydrated potato dice and slice piece product which has beneficial effects in that it contains more resistant starch than the previously known crushed dehydrated potato dice and slice piece products.

In one embodiment the potato product consists of french fries. Preferably the french fries product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a french fries product which has beneficial effects in that it contains more resistant starch than the previously known french fries products.

In one embodiment the potato product consists of sliced potato chips. Preferably the sliced potato chips product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a sliced potato chips product which has beneficial effects in that it contains more resistant starch than the previously known sliced potato chips products.

In one embodiment the potato product consists of fabricated potato chips. Preferably the fabricated potato chips product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a fabricated potato chips product which has beneficial effects in that it contains more resistant starch than the previously known fabricated potato chips products.

In one embodiment the potato product is a par-fried potato product. Preferably the par-fried potato product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a par-fried potato product which has beneficial effects in that it contains more resistant starch than the previously known par-fried potato products.

In one embodiment the potato product consists of industrially pre-cooked potatoes (pre-boiled potatoes). Preferably the industrially pre-cooked potato product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides an industrially pre-cooked potato product which has beneficial effects in that it contains more resistant starch than the previously known industrially pre-cooked potato products.

Extruded potato snacks, cooled mashed potatoes, instant mashed potatoes, croquettes and nuggets may also be produced using conventional techniques known to the skilled person from potato granules, potato flakes or ground or crushed dehydrated potato dice and slice pieces produced according to the invention.

Accordingly, in one embodiment the potato product consists of extruded potato snacks. Preferably the extruded potato snack product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides an extruded potato snack product which has beneficial effects in that it contains more resistant starch than the previously known extruded potato snack products.

In one embodiment the potato product consists of potato croquettes. Preferably the potato croquettes product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a potato croquettes product which has beneficial effects in that it contains more resistant starch than the previously known potato croquettes products.

In one embodiment the potato product consists of potato nuggets. Preferably the potato nugget product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a potato nugget product which has beneficial effects in that it contains more resistant starch than the previously known potato nugget products.

In one embodiment the potato product consists of mashed potatoes, such as cooled mashed potatoes or instant mashed potatoes. Preferably the mashed potato product produced according to the invention comprises more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch. Thus, the invention in this embodiment provides a mashed potato product which has beneficial effects in that it contains more resistant starch than the previously known mashed potato products.

Potato pre-products for use in the present invention are preferably processed according to the invention "in situ" by processing potatoes enzymatically as an integrated part of the industrial processing of the potatoes or the potato pre-products into potato products according to the present invention.

Preferably, the potato pre-products are treated in order to disrupt or destroy the cell membranes of intact potato cells prior to enzymatic treatment. This may be done e.g. by heat treatment of above 50 to 60°C. Such heat treatment may e.g. be accomplished when steam-peeling the potato pre-products. The treatment in order to disrupt or destroy the cell membrane of intact potato cells prior to enzymatic treatment may also be accomplished as part of the heating process wherein the potato pre-products are heated to the temperature at which the enzymatic treatment according to the invention is to occur.

The potato pre-products may additionally be pre-treated in various ways such as e.g. washing, cooking, blanching or steaming.

Thus, in a preferred embodiment of the invention the potato product is produced from potato pre-products using conventional methods in combination with enzymatic treatment according to the invention "in situ". Thereby, process time may be optimised and an increased yield and efficiency may be achieved.

Conventional methods for producing potato products are known to the skilled person. For production of flakes and granules reference is made to "Potato Processing", Ed. Talburt, W.F. & Smith, O.; Van Nostrand Reinhold, New York (1987). In particular reference is made to chapter 12 (granules) and chapter 13 (flakes). Potato flakes are dehydrated potato mash dried in a thin layer by e.g. drum drying. The dried sheet is broken mechanically, which results in cell rupture (15-20%). Flakes are generally soluble in cold water. Granules are air dried and generally soluble in warm water.

The potato product produced according to the invention may subsequently be used directly for consumption (i.e. optionally after further processing such as after further cooking) or it may be further processed (e.g. dehydrated and/or extruded as well as blanched, cooked, fried etc.) to produce other types of potato products e.g. chips, fabricated chips or french fries.

The enzymatic treatment according to the invention is accomplished using an enzyme selected from the group of enzymes capable of debranching starch selected among pullulanase and isoamylase. In one embodiment, a combination of different debranching enzymes is used.

Debranching enzymes in the context of the present invention are amylo-alpha-1,6-glucosidase, limit dextrinase, pullulanase and isoamylase. More than one type of debranching enzyme may be used in a method of the invention, e.g. pullulanase combined with isoamylase, amylo-alpha-1,6-glucosidase or limit dextrinase, or isoamylase combined with amylo-alpha-1,6-glucosidase or limit dextrinase. Also, more than one enzyme of the same type of debranching enzyme may be used in a method of the invention, e.g. two different pullulanases or two different isoamylases.

Isoamylase has been shown to be especially suitable in increasing the content of resistant starch in the products produced according to the invention. Accordingly, in one embodiment the most preferred enzyme in the context of the present invention is an isoamylase.

The isoamylase may be of any origin, e.g. of microbial origin, e.g. from filamentous fungi, yeast or bacteria. It may be derivable from a strain of e.g. Rhodothermus, Sulfolobus, Streptomyces, Flavobacterium, Cytophaga, Pseudomonas, such as Pseudomonas amyloderamosa, Xanthomonas, such as Xanthomonas maltophilia, Lipomyces, such as Lipomyces kononenkoae, or Bacillus, such as Bacillus circulans.

Pullulanase has been shown to be especially suitable in increasing the content of resistant starch in the products produced according to the invention. Further, pullulanase is well suited to operate at certain condition e.g. at pH values typically applied during potato processing or at temperatures above swelling or gelatinization temperatures of potato starch. Accordingly, in one embodiment the most preferred enzyme in the context of the present invention is a pullulanase.

The pullulanase may be of any origin, e.g. of microbial origin, e.g. from filamentous fungi, yeast or bacteria. It may be derivable from a strain of e.g. Bacillus, such as Bacillus deramificans, Bacillus acidopullulyticus, Bacillus circulans, Bacillus sectorramus, Bacillus brevis, Bacillus amyloderamificans or Bacillus naganoensis, or Klebsiella, such as Klebsiella planticola or Klebsiella pneumoniae. Commercially available pullulanase preparations which may be used include Promozyme D2 and Promozyme 400L (available from Novozymes A/S), G-zyme and Optimax-L 300 (available from Genencor Int.), Kleistase PL 45 (available from Daiwa Kasei), Pulluzyme 750L (available from Rhodia) and Amano 3 and Amano 8 (available from Amano).

In a preferred embodiment the enzyme used for the enzymatic treatment according to the invention is a pullulanase comprising an amino acid sequence which has at least 70% identity with SEQ ID NO:1 or a fragment thereof.

In a highly preferred embodiment the enzyme used for the enzymatic treatment according to the invention is a pullulanase comprising an amino acid sequence which has at least 80% identity with SEQ ID NO:1 or a fragment thereof.

In a highly preferred embodiment the enzyme used for the enzymatic treatment according to the invention is a pullulanase comprising an amino acid sequence which has at least 90% identity with SEQ ID NO:1 or a fragment thereof.

In a highly preferred embodiment the enzyme used for the enzymatic treatment according to the invention is a pullulanase comprising the amino acid sequence of SEQ ID NO:1 or a fragment thereof.

Another preferred debranching enzyme to be used in the method of the present invention is a hybrid polypeptide comprising a catalytic starch debranching domain and a starch binding domain and optionally a linker sequence connecting said domains.

The catalytic starch debranching domain may in principle be any such domain capable of catalysing the debranching of starch. The catalytic starch debranching domain is preferably derived from a pullulanase, more preferably from a pullulanase from *Bacillus acidopullulyticus.*

The starch binding domain (SBD) may in principle be any protein domain capable of binding to starch.

The SBD may belong to a recognized group of carbohydrate binding modules, or it may have a unique structure not being similar to other known carbohydrate binding modules. Several carbohydrate binding modules (CBM's) have been described in the literature and grouped in families based on sequence and structural similarities. Starch binding domains are found in the carbohydrate binding domain families CBM-20, CBM-21, CBM-25, CBM-26, CBM-34, CBM-41 and CBM-45. It is preferred that the SBD according to the invention belongs to the CBM-20 family.

SBD's belonging to the CBM-20 family have been found in enzymes derived from archae bacteria such as in the PF1108 protein from *Pyrococcus furiosis* DSM3638 (Uniprot acc. No. Q8U1 U7); from eubacteria such as in the alpha-amylase protein derived from *Anoxybacillus contaminans* (previously known as *Bacillus flavothermus),* the alpha-amylase from *Bacillus licheniformis* and the alpha-amylase from *Bacillus circulans* AM7; and from eukaryotes such as in the glucoamylase from *Aspergillus niger.*

The SBD may be a natural SBD or it may be a variant of a natural SBD having starch binding activity. In this connection a variant is understood as a polypeptide differing from a natural polypeptide by at least one amino acid residue. The at least one differing amino acid may be selected among substitutions, insertion or deletions of one or more amino acid residue or any combination thereof. Methods for preparing variant of a protein such as a SBD are well known to the skilled person.

An important purpose of the linker sequence is separating the catalytic domain from the SBD in order to prevent any steric hindrance of the function of one domain of the hybrid by another part of the hybrid. The linker may consist of only one or a few amino acids resulting of the construction strategy of the hybrid, or the linker may be a longer peptide. The exact sequence of the linker is not critical, however it is preferred that the sequence of the linker is selected so that the linker does not adopt any rigid structure. The amino acid composition of the linker is preferably selected so that the linker is rich in hydrophilic residues. Further proline residues may be beneficial since they have the ability to disrupt any secondary structure of the linker.

A preferred example of a proline rich linker according to the invention is -PEPTPEPN-.

In a particular preferred embodiment, a hybrid polypeptide to be used in the method of the present invention comprises an amino acid sequence which has at least 70% identity, preferably at least 80%, at least 90%, at least 95% or at least 98%, with SEQ ID NO: 2.

The amount of enzyme used is dependent upon the enzyme source and activity and base material used. Typically, the enzyme is used in a concentration of between 1 microgram enzyme protein (EP) per ml suspension and 700 microgram EP per ml suspension. Preferably the enzyme is used in a concentration of between 10 and 500 microgram EP per ml suspension, more preferably between 10 and 300 microgram EP per ml suspension. Suspension, in this context, means the aqueous composition comprising the potato pre-product.

The optimum parameters for enzymatic activity will vary depending upon the enzyme used. The rate of enzyme degradation depends upon factors known in the art, including the enzyme concentration, substrate concentration, pH, temperature, the presence or absence of inhibitors, and the degree and type of modification of the enzyme if any. These parameters may be adjusted to optimize the digestion rate of the starch base.

Generally the method of the invention is performed in an aqueous or buffered slurry or suspension comprising the potato pre-product to be treated. Typically, enzyme digestion is carried out at the highest solids content feasible without reducing reaction rates in order to facilitate any desired subsequent drying of the potato products. Reaction rates may be reduced by high solids content as agitation becomes difficult or ineffective and the potato pre-product becomes more difficult to handle. The concentration of the potato pre-product in the suspended compositions may generally vary and be in the range of about 5 to about 40%w/w, such as 6, 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % w/w.

Before or during the enzymatic treatment step, the temperature of the aqueous composition comprising the potato pre-product should be adjusted to provide effective enzymatic reaction. The skilled person will know which temperature or temperature range will be suitable for the enzymatic treatment in the given industrial process and should therefore be chosen to obtain sufficient or optimal enzymatic reaction. Such temperature will both depend on the specific industrial process and the debranching enzyme to be used. In general, a temperature of about 25°C to about 80°C will be suitable, particularly from about 50°C to about 70°C.

Likewise, the pH of the aqueous composition comprising the potato pre-product may be adjusted before or during the enzymatic treatment. The skilled person will know at which pH the enzymatic reaction in the given industrial process will be sufficient or optimal. In general, the pH may be adjusted to between about 3.0 and about 7.0, particularly from about 3.5 to about 6.5, using techniques known in the art.

The enzyme reaction is continued until the desired amount of starch is debranched in the potato pre-products. In general, the period of time sufficient for debranching the starch in the potato pre-products (incubation time) is from about 5 minutes to about 20 hours, preferably about 10 minutes to about 3 hours, more preferably about 10 minutes to about 1 hours, even more preferably about 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 minutes. The time of the reaction is dependent upon the type of potato pre-product (particularly, the surface to volume ratio of the potato pre-product), the type and amount of enzyme used, and the reaction parameters of solids percent, pH, and temperature.

In one embodiment, the aqueous composition comprising the potato pre-product may be, e.g., sliced or cut potatoes which have optionally been blanched, cooked or washed, and which are subsequently treated with one or more debranching enzymes by dipping the potato pre-product in a solution comprising the enzyme(s) for a short time period, such as for 5 to 120 seconds, and subsequent incubation in air. The invention therefore in one embodiment relates to a method for increasing the content of resistant starch in a potato product said method comprising the steps of:
a. providing an aqueous composition comprising a potato pre-product,
b. adjusting the temperature of the composition of step a) to a temperature suitable for enzymatic treatment of the potato pre-product by debranching enzymes,
c. treating the potato pre-product with one or more debranching enzymes, selected among pullulanase and isoamylase and
d. holding the enzyme treated potato pre-product at a temperature of between -2 and 50°C.

Inactivation of the enzyme used according to the present invention will normally occur as a consequence of the treatment steps used to obtain a potato product according to the invention. Optionally, the enzyme may however be deactivated (denatured) by any technique known in the art such as heat, acid or base deactivation. For example, acid deactivation may be accomplished by adjusting the pH to lower than 2.5 for at least 30 minutes or heat deactivation may be accomplished by raising the temperature to from about 80 to about 90°C for at least about 5 minutes to fully deactivate the enzyme.

After enzymatic treatment the potato pre-product is optionally cooled to a lower temperature.

The enzyme treated potato pre-product is allowed to stand whereby the starch in the debranched potato pre-product is allowed to crystallize and retrograde. The standing or holding of the enzyme treated potato pre-product is continued until the desired amount of crystallization and retrogradation is obtained (holding time). In general, the period of time sufficient for crystallisation and retrogradation of the enzyme treated potato pre-product is from about 10 minutes to about 40 hours. Thus, the enzyme treated potato pre-product is preferably held at -2 to 50°C for about 10 minutes to about 40 hours, more preferably for about 10 minutes to about 20 hours, such as for about 10 minutes to about 4 hours, or for about 15 minutes to about 2 hours, even more preferably for about 15 minutes to about 1 hour.

The potato product may then be recovered using methods known in the art, particularly by filtration or by drying, including spray drying, freeze drying, flash drying or air drying.

It has been shown that an additional increase in the content of resistant starch in the potato product produced according to the invention can be obtained by a subsequent treatment step wherein the potato pre-product is heated after the enzymatic treatment. Optionally, the enzyme treated potato pre-product may be cooled to a temperature of between -2 and 30°C prior to such heating. Thus, in one embodiment the enzyme treated potato pre-products are cooled and additionally subjected to a second heating step. Preferably, the products are heated to a temperature of between 50 and 90°C in the second heating step, more preferable 60 to 80°C, even more preferably 65 to 75°C. The additional heating step may have a duration of between 5 and 40 minutes, preferably between 10 and 30 minutes, even more preferably between 15 and 25 minutes. Preferably, the optional cooling and subsequent heating is performed before holding of the enzyme treated potato pre-product at a temperature of between -2 and 50°C to obtain further retrogradation.

Additional cycles of cooling to temperatures between -2 and 30°C followed by heating to temperatures between 50 and 90°C may be applied to further increase the content of resistant starch.

It has further been shown that an additional increase in the content of resistant starch in the potato product produced according to the invention can be obtained by a subsequent treatment step wherein the enzyme treated potato pre-product is frozen. Thus, in one embodiment enzyme treated potato pre-product is additionally treated in a freezing step. Preferably, the additional freezing step is an instant freezing step, whereby the pre-product is frozen in less than 5 minutes. In one embodiment the enzyme treated potato pre-product is frozen by blowing air having a temperature of -60°C to -10°C over the products.

It has been shown that an additional increase in the content of resistant starch in the potato product produced according to the invention can be obtained by a subsequent treatment step wherein the enzyme treated potato pre-product is dried. Thus, in one embodiment the enzyme treated potato pre-product is additionally treated in a drying step.

It has been shown that an additional increase in the content of resistant starch in the potato product produced according to the invention can be obtained by a subsequent treatment step wherein the enzyme treated potato pre-product is freeze-dried. Thus, in one embodiment the enzyme treated potato pre-product is additionally treated in a freeze-drying step.

In another embodiment, the additional step of drying the enzyme treated potato pre-product is performed before step d) and step d) is carried out on a reconstituted dried enzyme treated potato pre-product, i.e. on a dried enzyme treated potato pre-product which has been reconstituted by addition of water. The reconstituted potato product may form part of a dough to be used for further production.

In another embodiment, the enzyme treated potato pre-product is semi-dried, e.g. partially dried to a dry matter content of no more than 80%, preferably no more than 70%, no more than 60% or no more than 50%, resulting in a partially dried enzyme-treated potato pre-product. In one embodiment, partial drying is performed before step d) and step d) is carried out on the partially dried enzyme-treated potato pre-product, e.g., retrogradation may take place during holding of the enzyme treated potato pre-product at a temperature of between - 2 and 50°C.

In another embodiment, a small amount of already retrograded starch is added to the enzyme treated potato pre-product before or during step d). Such addition of already retrograded starch may seed retrogradation of the enzymatically debranched starch in the enzyme treated potato pre-product.

Dependent on the type of potato product to be produced the skilled person may employ other treatment steps. Such steps may be performed after the treatment steps according to the invention, or they may be employed in between the treatment steps according to the invention. Examples of other treatment steps include mechanical treatment steps like cutting, mashing, molding and pressing. Other examples of treatment steps include treatment steps like frying, deep-frying, par-frying, cooking, bleaching, baking and leaching the potato product.

### Embodiments

In one embodiment according to the invention, French fries may be produced in an industrial scale (e.g. 0.5 to 30 ton/hour) in e.g. the following way: Potatoes are washed and peeled (e.g. steam peeling or knife peeling or abrasive peeling). The resulting potato pre-products are cut into the desired shape (e.g. elongated potato sticks). The cut potato pre-products are blanched or leached at 60°C to 90°C for 5 to 60 minutes typically in two or three sequential steps. The temperature of the blanched potato pre-products are then adjusted to the temperature suitable for enzymatic treatment according to the invention (e.g. 45°C to 75°C) and thereafter treated with enzyme according to the invention. The incubation time may be 5 to 120 minutes, preferably between 10 and 20 minutes. The treatment with debranching enzyme may be integrated with any of the preceding blanching or leaching steps. The resulting products may thereafter be dried (e.g. by air) and further cooled to between -2 and 50°C, such as to between -2 and 30°C, and held at that temperature according to the invention for 0.5 to 4 hours. The resulting product is pre-cooked e.g. by deep-frying at 150 to 200°C for 30 to 180 seconds (to reach a moisture content of about 60 to 75%). The products are thereafter cooled. The holding of the enzyme treated potato pre-product at a temperature of between -2 and 50°C according to the invention may optionally be performed after pre-cooking instead of prior to pre-cooking. The product is optionally frozen or packed in modified atmosphere. The french fries produced according to the invention may comprise between 4% and 60% resistant starch. Preferably the french fries produced according to the invention comprise more than 5% resistant starch. Preferably the french fries produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

In one embodiment according to the invention, potato flakes may be produced in an industrial scale in e.g. the following way: Potatoes are rinsed (washed) and peeled. The resulting potato pre-products are sliced into thin potato pre-products (thickness of between 1 and 2 cm). The potato pre-products are then pre-cooked for about 20 min at 70 to 75°C. The products are then cooled for about 20 min (target pulp temperature depends on dry solids content - for high density potatoes the target pulp temperature is 21 °C - for low density potatoes the target pulp temperature is 10°C). One result of this precooking step is that starch gelatinizes within the cells. Some resistant starch may additionally be formed during the cooling step. The products are subsequently cooked at a temperature of 90°C to 110°C for 20 to 60 minutes (usually 30 minutes), e.g. by using direct steam. While still hot the products are subsequently mashed. The mash is then cooled to the temperature suitable for enzymatic treatment according to the invention (45°C to 75°C) and thereafter treated with enzyme according to the invention. The incubation time may be 5 to 120 minutes, preferably between 15 and 20 minutes. The products are thereafter cooled to between -2 and 50°C, such as to between -2 and 30°C, and held at that temperature according to the invention for 0.5 to 4 hours. The products are then dried and the dried sheets are broken. The potato flakes produced according to the invention may comprise between 4% and 60% resistant starch. Preferably the potato flakes produced according to the invention comprise more than 5% resistant starch. Preferably, the potato flake product produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

In one embodiment, potato flakes are produced essentially as described above, except that the mash after enzymatic treatment is not cooled and held in the cold, but instead partially dried to a dry matter content of no more than 80% resulting in partially dried sheets, which are broken into flakes. Retrogradation of the partially dried flakes will take place during holding of the flakes at a temperature of between -2 and 50°C according to the invention.

In one embodiment according to the invention, potato flakes may be produced in an industrial scale in e.g. the following way: Potatoes are rinsed (washed) and peeled. The resulting potato pre-products are sliced into thin potato pre-products (thickness of between 1 and 2 cm). The potato pre-products are then pre-cooked for about 20 min at 70 to 75°C. The products are then cooled to a temperature suitable for enzymatic treatment according to the invention (45°C to 75°C) and thereafter treated with enzyme according to the invention. The incubation time may be 5 to 120 minutes, preferably between 15 and 20 minutes. The enzyme treatment may also be performed simultaneously with precooking. The products are thereafter cooled to between -2 and 50°C, such as to between -2 and 30°C, and held at such temperature according to the invention for 0.5 to 4 hours. The products are subsequently cooked at a temperature of 90°C to 110°C for 20 to 60 minutes (usually 30 minutes), e.g. by using direct steam. While still hot the products are subsequently mashed. The products are then dried and the sheets are broken. The potato flakes produced according to the invention comprise between 4% and 60% resistant starch. Preferably the potato flakes produced according to the invention comprise more than 5% resistant starch. More preferably, the potato flake product produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

In one embodiment, potato flakes are produced essentially as described above, except that the sliced potatoes after precooking and enzymatic treatment are not cooled and held in the cold, but instead cooked and mashed, whereafter the mash is partially dried to a dry matter content of no more than 80%, resulting in partially dried sheets, which are broken into flakes. Retrogradation of the partially dried flakes will take place during holding of the flakes at a temperature of between -2 and 50°C according to the invention.

In one embodiment according to the invention, potato flakes may be produced in an industrial scale in e.g. the following way: Potatoes are rinsed (washed) and peeled. The resulting potato pre-products are sliced into thin potato pre-products (thickness of between 1 and 2 cm). The products are then heated to the temperature suitable for enzymatic treatment according to the invention (45°C to 75°C) and thereafter treated with enzyme according to the invention. The incubation time may be 5 to 120 minutes, preferably between 15 and 20 minutes. The products are thereafter cooled to between -2 and 50°C, such as to between -2 and 30°C, and held at that temperature according to the invention for 0.5 to 4 hours. The products may optionally then be pre-cooked for about 20 minutes at around 70 to 75°C. The products are then optionally cooled for about 20 min (target pulp temperature depends on dry solids content - for high density potatoes the target pulp temperature is 21 °C - for low density potatoes the target pulp temperature is 10°C). The products are subsequently cooked at a temperature of 90°C to 110°C for 20 to 60 minutes (usually 30 minutes), e.g. by using direct steam. While still hot the products are subsequently mashed. The products are then dried and the sheets are broken. The potato flakes produced according to the invention comprise between 4% and 60% resistant starch. Preferably the potato flakes produced according to the invention comprise more than 5% resistant starch. More preferably, the potato flake product produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

In one embodiment, potato flakes are produced essentially as described above, except that the sliced potatoes after enzymatic treatment are not cooled and held in the cold, but instead cooked and mashed, whereafter the mash is partially dried to a dry matter content of no more than 80%, resulting in partially dried sheets, which are broken into flakes. Retrogradation of the partially dried flakes will take place during holding of the flakes at a temperature of between -2 and 50°C according to the invention.

In one embodiment according to the invention, industrially pre-cooked potatoes (pre-boiled potatoes) may be produced in an industrial scale in e.g. the following way: Potatoes are rinsed (washed) and peeled. Peeling may generally be done by steam peeling at e.g. 150°C or by knife peeling. The resulting potato pre-products are optionally sliced, cut and/or sorted into potato pre-products of the desired shape and size. The products are then heated to the temperature suitable for enzymatic treatment according to the invention (45°C to 75°C) and thereafter treated with enzyme according to the invention. The incubation time may be 5 to 120 minutes, preferably between 15 and 20 minutes. The products may optionally then be washed and/or salted. The enzyme treatment may also be performed simultaneously with slicing or cutting, before sorting and/or simultaneously with or after washing and salting. The products are subsequently cooked at a temperature of 70°C to 110°C for 10 to 120 minutes (usually 30 minutes). Steam cooking may be applicable (e.g. at 100 to 150°C) by using direct steam, particularly if atmospheric packaging is performed after cooking. Packaging may be in vacuum or modified atmosphere and may be performed before or after cooking. If the products are packaged after cooking, addition of preservatives may be needed. The products are thereafter cooled to between -2 and 50°C, such as to between -2 and 30°C, and held at that temperature according to the invention for at least 0.5 to 4 hours. This treatment step may be performed as part of the storage of the products and may be performed while or after the products are packaged. In practice, the pre-cooked potatoes may be stored for several weeks at e.g. about 4°C and are typically pre-heated before serving. The industrially pre-cooked potatoes (pre-boiled potatoes) produced according to the invention comprise between 10% and 60% resistant starch. Preferably the industrially pre-cooked potatoes produced according to the invention comprise more than 15% resistant starch. More preferably, the industrially pre-cooked potatoes produced according to the invention comprise more than 16%, such as more than 17, 18, 19, 20, 21, 22, 23, 24, 25, 26, 27, 28, 29, 30, 31, 32, 33, 34, 35, 36, 37, 38, 39, 40 % resistant starch.

In one embodiment according to the invention, sliced potato chips may be produced in an industrial scale in e.g. the following way: Potatoes are rinsed (washed) and peeled. Peeling may generally be done by abrasive peeling, by knife peeling or by steam peeling at e.g. 150°C. The resulting potato pre-products are optionally sliced and cut and/or sorted into potato pre-products of the desired shape and size. The sliced or cut product may optionally be blanched (e.g. for 10 sec. to 10 min. at 65 to 95°C. Blanching time and temperatures depends on potato variety and storage). The sliced and/or cut and/or blanched product may optionally be washed. The products are then heated to the temperature suitable for enzymatic treatment according to the invention (45°C to 75°C) and thereafter treated with enzyme according to the invention. The incubation time may be 5 to 120 minutes, preferably between 15 and 20 minutes. The products are thereafter cooled to between -2 and 50°C, such as to between -2 and 30°C, and held at that temperature according to the invention for at least 0.5 to 4 hours. Optionally, the products may be treated by additional heating to 50 to 75°C for 5 to 30 min. The products may subsequently optionally be sorted and dewatered. The products are thereafter deep fried for 10 sec. to 8 minutes at 120 to 195°C. Frying times and temperatures depends on cut size, product type etc. The oil may subsequently be stripped and the products may be flavored and packaged. The sequence of treatment with debranching enzyme, cooling and optional heating is preferable performed after slicing and before frying, and may be integrated with any of the existing steps (e.g. simultaneous blanching and enzyme treatment). The debranching enzyme treatment bath may be replaced with a short dip (5 to 120 sec) in the enzyme solution and subsequent incubation in air. The sliced potato chips produced according to the invention may comprise between 4% and 60% resistant starch. Preferably the sliced potato chips produced according to the invention comprise more than 5% resistant starch. More preferably the sliced potato chips produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

In one embodiment according to the invention, ground or crushed dehydrated potato dice and slice pieces may be produced in an industrial scale in e.g. the following way: Potatoes are rinsed (washed) and peeled. The resulting potato pre-products are cut into potato pieces by slicing or dicing. The potato pieces are then blanched for 10 sec to 30 min at 60 to 95°C or by steaming. The temperature of the potato pieces are adjusted to the temperature suitable for enzymatic treatment according to the invention (30°C to 75°C, preferably 45 to 75°C, more preferably 45 to 65°C) and thereafter treated with enzyme according to the invention. The potato pieces may be submerged in or sprinkled by water containing the enzyme according to the invention. The incubation time may be 5 to 120 minutes, preferably between 10 and 20 minutes. The products are thereafter cooled to between -2 and 50°C, preferably between -2 and 10°C, and held at that temperature according to the invention for 0.2 to 4 hours. The potato pieces may optionally then be heated for about 5 to 30 minutes at around 60 to 90°C, preferably 60 to 80°C. The potato pieces are then dried, e.g. in hot air to a moisture content of 1 to 10%, preferably 6 to 8%. The dried potato pieces may further be ground. The ground or crushed dehydrated potato dice and slice pieces produced according to the invention comprise between 4% and 60% resistant starch. Preferably the ground or crushed dehydrated potato dice and slice pieces produced according to the invention comprise more than 5% resistant starch. More preferably, the ground or crushed dehydrated potato dice and slice pieces produced according to the invention comprise more than 6%, such as more than 7, 8, 9, 10, 11, 12, 13, 13, 14, 15, 16, 17, 18, 19, 20, 21, 22, 23, 24, 25, 26, 27, 28, 29, 30, 31, 32, 33, 34, 35, 36, 37, 38, 39, 40 % resistant starch.

### Examples

### Example 1

8-10 g potato flakes (dry solids 91.4%) were grinded in a coffee mill for 1 min. 5.00 g of milled flakes were suspended in 100 ml 25 mM acetate buffer pH 5.0. The suspension was stirred for 30 min at room temperature (magnetic stirring). 1.1 g of this suspension was transferred to eppendorf tubes. Isoamylase (1000 U/ml from Pseudomonas sp., Megazyme, Lot 51203) was tested in four different concentrations: 0 U/ml isoamylase (41 µl de-ionized water); 3 U/ml isoamylase (41 µl of isoamylase diluted 12.42 times in de-ionized water), 10 U/ml Isoamylase (41 µl of isoamylase diluted 3.73 times in de-ionized water) and 30 U/ml Isoamylase (41 µl of isoamylase diluted 1.24 times in de-ionized water). All tests were prepared in double determinations. After enzyme addition, the suspensions were mixed and incubated for 2 hours at 55°C on an Eppendorf Thermomixer Comfort (1000 rpm). The enzyme reaction was terminated by increasing the temperature to 90°C for 10 min. The samples were thereafter held (holding time) at 4°C for 1 or 4 hours (according to below table) in order to facilitate the formation of resistant starch. After the cold holding time the samples were analysed for resistant starch using Megazyme Resistant Starch Assay Procedure K-RSTAR 08/05 (AOAC Method 2002.02 and AACC Method 32-40). The total content of the eppendorf tubes (1.14 g) was used for the analysis (not 0.5 g as stated in the above assay procedure (for wet samples)). The results are given below:

| Dose of Isoamylase | Resistant starch (g/100g flakes) 1 hour holding time | Resistant starch (g/100g flakes) 4 hour holding time |
|---|---|---|
| 0 U/ml | 1.43 | 0.97 |
| 3 U/ml | 2.28 | 3.36 |
| 10 U/ml | 1.57 | 3.82 |
| 30 U/ml | 4.47 | 13.3 |

Additionally, the unprocessed potato flake powder was analysed using the Megazyme resistant starch method resulting in 1.87 g resistant starch/100 g flakes.

The results show that it is possible to increase the level of resistant starch in potato products using the described method "in situ". The example further show that increasing holding time at 4°C and/or increasing dose of Isoamylase results in significant increase in the level of resistant starch.

### Example 2

8-10 g potato flakes (dry solids 91.4%) were grinded in a coffee mill for 1 min. 5.00 g of milled flakes were suspended in 100 ml 25 mM acetate buffer pH 5.0. The suspension was stirred for 30 min at room temperature (magnetic stirring). 1.1 g of this suspension was transferred to eppendorf tubes. Isoamylase (1000 U/ml from Pseudomonas sp., Megazyme, Lot 51203) was tested in four different concentrations: 0 U/ml isoamylase (41 µl de-ionized water); 3 U/ml isoamylase (41 µl of isoamylase diluted 12.42 times in de-ionized water), 10 U/ml Isoamylase (41 µl of isoamylase diluted 3.73 times in de-ionized water) and 30 U/ml Isoamylase (41 µl of isoamylase diluted 1.24 times in de-ionized water). All tests were prepared in double determinations. After enzyme addition, the suspensions were mixed and incubated for 2 hours at 55°C on an Eppendorf Thermomixer Comfort (1000 rpm). The enzyme reaction was terminated by increasing the temperature to 90°C for 10 min. The samples were thereafter held (holding time) at 4°C for 4 hours in order to facilitate the formation of resistant starch. After the holding time the samples were quickly frozen at -40°C (using shock freezing in Tecnomac). The frozen samples were thereafter freeze dried for 2 days in Heto Power Dry PL9000 from Holm & Halby. After freeze drying the samples were analysed for resistant starch using Megazyme Resistant Starch Assay Procedure K-RSTAR 08/05 (AOAC Method 2002.02 and AACC Method 32-40). The results are given below:

| Dose of Isoamylase | Resistant starch (g/100g flakes) |
|---|---|
| 0 U/ml | 2.07 |
| 3 U/ml | 5.97 |
| 10 U/ml | 7.77 |
| 30 U/ml | 18.2 |

Comparing the results of example 2 with the results of example 1 (4 hours holding time) it is evident that freezing and freeze drying result in a significant increase in the level of resistant starch in the potato flakes.

### Example 3

8-10 g potato flakes (dry solids 91.4%) were grinded in a coffee mill for 1 min. 5.00 g of milled flakes were suspended in 100 ml 25 mM acetate buffer pH 5.0. The suspension was stirred for 30 min at room temperature (magnetic stirring). 1.1 g of this suspension was transferred to eppendorf tubes. Promozyme D2 (1350 NPUN/g, Novozymes A/S) was tested in four different concentrations: 0 NPUN/ml Promozyme D2 (41 µl de-ionized water); 0.5 NPUN/ml Promozyme D2 (41 µl of Promozyme D2 diluted 100 times in de-ionized water); 5 NPUN/ml Promozyme D2 (41 µl of Promozyme D2 diluted 10 times in de-ionized water); 50 NPUN/ml Promozyme D2 (41 µl of Promozyme D2). All tests were prepared in double determinations. After enzyme addition, the suspensions were mixed and incubated for 2 hours at 55°C on an Eppendorf Thermomixer Comfort (1000 rpm). The enzyme reaction was terminated by increasing the temperature to 90°C for 10 min. The samples were thereafter held (holding time) at 4°C for 4 hours in order to facilitate the formation of resistant starch. After the holding time the samples were quickly frozen at -40°C (using shock freezing in Tecnomac). The frozen samples were thereafter freeze dried for 2 days in Heto Power Dry PL9000 from Holm & Halby. After freeze drying the samples were analysed for resistant starch using Megazyme Resistant Starch Assay Procedure K-RSTAR 08/05 (AOAC Method 2002.02 and AACC Method 32-40). The results are given below:

| Dose of Promozyme D2 | Resistant starch (g/100g flakes) |
|---|---|
| 0 NPUN/ml | 2.30 |
| 0.5 NPUN/ml | 2.57 |
| 5 NPUN/ml | 5.78 |
| 50 NPUN/ml | 14.9 |

The results show that increasing dose levels of Promozyme D2 results in a concomitant increase of resistant starch.

### Example 4

8-10 g potato flakes (dry solids 91.4%) were grinded in a coffee mill for 1 min. 5.00 g of milled flakes were suspended in 100 ml 25 mM acetate buffer pH 5.0. The suspension was stirred for 30 min at room temperature (magnetic stirring). To each eppendorf tube was transferred 1.1 g of this suspension. Isoamylase (1000 U/ml from Pseudomonas sp., Megazyme, Lot 51203) was tested in three different concentrations: 0 U/ml isoamylase (41 µl de-ionized water); 10 U/ml Isoamylase (41 µl of isoamylase diluted 3.73 times in de-ionized water) and 30 U/ml Isoamylase (41 µl of isoamylase diluted 1.24 times in de-ionized water). All tests were prepared in double determinations. After enzyme addition then the solutions were mixed and incubated for 0.5, 2 and 22 hours at 55°C on an Eppendorf Thermomixer Comfort (1000 rpm) according to the table below. The enzyme reaction was terminated by placing the tubes in an Eppendorf Thermomixer Comfort (1000 rpm) for 10 min at 90°C. The samples were held (holding time) at 4°C for 4 hours in order to facilitate the formation of resistant starch. After the holding time then the samples were quickly frozen at -40°C (using shock freezing in Tecnomac). The frozen samples were freeze dried for 2 days in Heto Power Dry PL9000 from Holm & Halby. After freeze drying the samples were analysed for resistant starch using Megazyme Resistant Starch Assay Procedure K-RSTAR 08/05 (AOAC Method 2002.02 and AACC Method 32-40). The results are given below:

| Dose of Isoamylase | Enzyme Incubation time | Resistant starch (g/100 g flakes) |
|---|---|---|
| 0 U/ml | 0.5 hours | 1.89 |
| | 2.0 hours | 2.81 |
| | 22 hours | 1.91 |
| 10 U/ml | 0.5 hours | 17.2 |
| | 2.0 hours | 14.0 |
| | 22 hours | 14.7 |
| 30 U/ml | 0.5 hours | 20.5 |
| | 2.0 hours | 20.5 |
| | 22 hours | 17.9 |

0.5 hours enzyme incubation time gives the highest amount of resistant starch (g/100g flakes) at all dosis levels of Isoamylase.

### Example 5

8-10 g potato flakes (dry solids 91.4%) were grinded in a coffee mill for 1 min. 5.00 g of milled flakes were suspended in 100 ml 25 mM acetate buffer pH 5.0. The suspension was stirred for 30 min at room temperature (magnetic stirring). To each eppendorf tube was transferred 1.1 g of this suspension. Isoamylase (1000 U/ml from Pseudomonas sp., Megazyme, Lot 51203) was tested in 30 U/ml Isoamylase (33 µl of isoamylase). After enzyme addition then the solutions were mixed and incubated for 2 hours at 55°C on an Eppendorf Thermomixer Comfort (1000 rpm). The enzyme reaction was terminated by placing the tubes in an Eppendorf Thermomixer Comfort (1000 rpm) for 10 min at 90°C. The samples were held (holding time) at 4°C for 4 hours in order to facilitate the formation of resistant starch. After the holding time a second heat treatment was performed in a water bath at 70 °C; 80 °C; 90 °C or no heat treatment for 20 minutes according to the table below. All tests were prepared in triple determinations. After the second heat treatment then the samples were quickly frozen at -40°C (using shock freezing in Tecnomac). The frozen samples were freeze dried for 2 days in Heto Power Dry PL9000 from Holm & Halby. After freeze drying the samples were analysed for resistant starch using Megazyme Resistant Starch Assay Procedure K-RSTAR 08/05 (AOAC Method 2002.02 and AACC Method 32-40). The results are given below:

| Heat treatment | Resistant starch (g/100 g flakes) |
|---|---|
| No heat treatment | 18.1 |
| 70°C | 27.3 |
| 80°C | 22.3 |
| 90°C | 18.0 |

A second heat treatment significantly improves the amount of resistant starch in the flakes.

### Example 6

600 g of Bintje potatoes (Grill-Kartoflen, Interfrugt Catering, Denmark) were manually peeled. Approx. 500 g of the peeled potatoes was steam cooked under pressure using a preheated CertoClav 12L MultiControl (Tisch-Autoklav, Austria) at 20 psi (125°C) for 10 min containing 1 l of de-ionized water. The total cooking time was approx. 40 min including heating and cooling time (must be cooled to 99.9°C before the CertoClav can be opened). The potatoes were transferred to a Stomacher Bag Model 400 (Seward Ltd, UK) and mashed for 4 x 30 sec using a Bagmixer 400 ml (InterScience, France). The mash was manually shaken to the bottom of the bag between each mash cycle. Four different mash suspensions with varying dry solids content were prepared by mixing the mashed potatoes with de-ionized water according to the following table. The dry solids content was subsequently determined after drying at 105°C.

| Target %dry solids of mash suspension | g potato mash | g De-ionized water added | Actual %dry solids of mash suspension |
|---|---|---|---|
| 20 | 100 | 0 | 19.5 |
| 15 | 100 | 33.3 | 15.3 |
| 10 | 100 | 100 | 9.65 |
| 5 | 100 | 300 | 4.58 |

2.0 g of the mash suspensions were transferred to glass tubes and a magnet was added to each tube.

The tubes containing the mash suspension were pre-heated to 55°C using a heat block with magnetic stirring. To each tube was further added 250 µl de-ionized water (blank) or enzyme solution according to the table below and incubated for 2.5 hours. The enzyme used was a pullulanase derived from Bacillus acidopullulyticus having the sequence shown in SEQ ID NO: 1. All tests were prepared in double determinations. The enzyme reaction was terminated by placing the tubes in a 90°C water bath for 10 minutes. The samples were held (holding time) at 4°C for 4 hours in order to facilitate the formation of resistant starch. After the holding time then the samples were quickly frozen at -40°C (using shock freezing in Tecnomac). The frozen samples were freeze dried for 2 days in Heto Power Dry PL9000 from Holm & Halby. After freeze drying the samples were analysed for resistant starch using Megazyme Resistant Starch Assay Procedure K-RSTAR 08/05 (AOAC Method 2002.02 and AACC Method 32-40). The results are given below:

| %Dry solids of mash suspension | Treatment | Dose NPUN(P)/tube | Resistant starch (g/100 g dried mash) |
|---|---|---|---|
| 5 | Blank | 0 | 2.70 |
| | SEQ ID NO: 1 | 100 | 10.8 |
| 10 | Blank | 0 | 4.13 |
| | SEQ ID NO: 1 | 100 | 11.9 |
| 15 | Blank | 0 | 4.57 |
| | SEQ ID NO: 1 | 100 | 16.2 |
| 20 | Blank | 0 | 4.28 |
| | SEQ ID NO: 1 | 100 | 15.1 |

The amount of available starch in the blank was measured to 59.0 g/100 dry mash (average of all blank treatments).

Addition of pullulanase significantly increased the level of resistant starch in the potato mash.

### Example 7

Approx. 5000 g Agria Speisekartoffeln (dry matter 21.5%; 15.1% starch) was peeled by abrasion for about 3 minutes using an RWD Schälboy (Reppisch-Werk AG, Switzerland). After peeling the potatoes were cut in 1 cm slices using an Anliker and rinsed in cold tap water (for about 5 minutes in approx. 30L tap water). The potatoes were blanched for 20 minutes in approx. 30L of 71 °C tap water, cooled for 20 minutes in 30L 15-20°C tap water and finally steam cooked for 35 minutes in 101 °C tap water. The potato pieces were mashed using a Universalküchenmachine (Romca) with 1.5 cm holes, cooled to about 55°C and blended with enzyme/tap water according to the table below. Two enzyme preparations were used: A pullulanase derived from Bacillus acidopullulyticus having the sequence shown in SEQ ID NO: 1 (1600 NPUN/g) and Promozyme D2 (available from Novozymes, Denmark). The blended mash was transferred to a heating cabinet and incubated for 2 hours (during this time the temperature in the mash drops to about 40°C). The mash was then cooled to 4°C for 3 hours to facilitate formation of resistant starch. The cold mash was dried on a single drum drier with two applicator rolls (L.A. Mitchell Ldt., Manchester, UK) at 3 bar steam pressure (140.8°C). Roller speed as listed in below table. The dried mash was flaked in a Frewitt-Granulator, type MGL.6.A, Freiburg, Switzerland) with a mesh size of 0.5 cm.

A reference sample of potato flakes sample was produced as described above, however, omitting the enzyme incubation and mash cooling step (= standard process).

The potato flakes were analysed for resistant starch using Megazyme Resistant Starch Assay Procedure K-RSTAR 08/05 (AOAC Method 2002.02 and AACC Method 32-40). The dry solids content was determined after drying at 105°C.

| Parameter | Promozyme D2 | SEQ ID NO:1 | Control (no enzyme) | Standard process - reference |
|---|---|---|---|---|
| Net weight of raw potatoes (g) | 5004 | 5054 | 5022 | 5012 |
| Enzyme addition | 75 g/kg mash | 35 g/kg mash | - | - |
| Water addition | - | 40 9/kg mash | 75 g/kg mash | - |
| pH adjustment of potato mash | pH 5 by addition of 25 ml 1 M citric acid | no | no | no |
| g flakes produced | 684 | 579 | 756 | 709 |
| Roller speed (rpm) | 3.5 | 3.5 | 6 | 2.3 |
| Moisture content (%) | 7.83 | 7.69 | 9.31 | 7.17 |
| Resistant starch (g/100 g DM) | 13.3 | 12.5 | 3.35 | 2.59 |
| Non resistant starch (g/100 g DM) | 64.7 | 63.0 | 74.5 | 72.0 |

When pullulanase was added to the mash a higher content of resistant starch was found in the final flakes.

### Example 8

20 g potato flakes produced as described in Example 7 was grinded in a coffee mill for 30 sec. 10 g of the grinded flakes was mixed for 1 minute with 2.0 g amylopectin using a mini pin mixer from National MFG (Lincoln, Nebraska). 8 ml of tap water was added while mixing and the mixing continued for 30 seconds. The dough was gently moulded by hand and sheeted on a noodle forming machine from H.F. Kejenteraan SDN BHD (Malaysia); 3 times x 1 mm and 10 times x 0.3 mm. 10-12 chips (approx. 2.5 cm) were cut from each dough. The chips were fried for 10 or 30 seconds at 180°C. The potato chips were analysed for resistant starch using Megazyme Resistant Starch Assay Procedure K-RSTAR 08/05 (AOAC Method 2002.02 and AACC Method 32-40). The dry solids content was determined after drying at 105°C. The results are given below:

| Sample | Resistant starch (g/100 g DM) | | Dry solids | |
|---|---|---|---|---|
| | 10 sec | 30 sec | 10 sec | 30 sec |
| Promozyme D2 | 7.8 | 7.7 | 89.1 | 91.1 |
| SEQ ID N0:1 | 9.0 | 6.9 | 87.8 | 94.8 |
| Control (no enzyme) | 1.5 | 1.1 | 80.8 | 87.3 |
| Standard process - reference | 1.8 | 1.5 | 77.7 | 83.2 |

Chips prepared from pullulanase treated flakes contain more resistant starch.

### Example 9

8-10 g potato flakes (dry solids 91.4%) were grinded in a coffee mill for 1 min. 5.00 g of milled flakes were suspended in 100 ml 25 mM acetate buffer pH 5.0. The suspension was stirred for 30 min at room temperature (magnetic stirring). To each eppendorf tube was transferred 1.1 g of this suspension. Experimental pullulanase with an added carbohydrate binding module (CBM) having the sequence shown in SEQ ID NO: 2 (2000 NPUN/ml) was dosed at 0; 0.5; 2.5 and 5 NPUN/ml and compared to a pullulanase derived from *Bacillus acidopullulyticus* having the sequence shown in SEQ ID NO: 1 (1600 NPUN/g). All tests were prepared in double determinations. After enzyme addition, the solutions were mixed and incubated for 2 hours at 55°C on an Eppendorf Thermomixer Comfort (1000 rpm). The enzyme reaction was terminated by placing the tubes in an Eppendorf Thermomixer Comfort (1000 rpm), for 10 min at 90°C. The samples were held (holding time) at 4°C for 4 hours in order to facilitate the formation of resistant starch. After the holding time, the samples were quickly frozen at -40°C (using shock freezing in Tecnomac). The frozen samples were freeze dried for 2 days in Heto Power Dry PL9000 from Holm & Halby. After freeze drying, the samples were analysed for resistant starch using Megazyme Resistant Starch Assay Procedure K-RSTAR 08/05 (AOAC Method 2002.02 and AACC Method 32-40). The results are given below:

| Enzyme | Dose (NPUN/ml) | Resistant starch (g/100 g flakes) |
|---|---|---|
| Pullulanase (no CBM) SEQ ID NO: 1 | 0 | 1.9 |
| | 0.5 | 6.0 |
| | 2.5 | 9.4 |
| | 5.0 | 11.9 |
| Pullulanase (with CBM) SEQ ID NO: 2 | 0 | 1.9 |
| | 0.5 | 9.3 |
| | 2.5 | 14.0 |
| | 5.0 | 12.2 |

A higher resistant starch level is obtained at low dose levels when the pullulanase has a carbohydrate binding module attached.

### Example 10

Bintje potatoes (Grill-Kartoflen, Interfrugt Catering, Denmark) were manually peeled and cut into French fries using a French fry cutter (Taglia patate), size 0.8x0.8 cm. 60 g of potato sticks (from different potatoes) were sequentially blanched by transferring the sticks to a 4L de-ionzed water bath at 85°C for 4 min and subsequently to 160 ml de-ionized water preheated to 70°C for 15 minutes. Each potato stick was equally cut into 10 pieces and divided into 10 portions of approx. 5 g potato. Debranching was performed using the following enzymes: Promozyme D2 (1350 NPUN/g) and Promozyme 400L (1600 NPUN/g), both available from Novozymes A/S, Denmark, pullulanase derived from *Bacillus acidopullulyticus* having the sequence shown in SEQ ID NO: 1 (1600 NPUN/g) and experimental pullulanase with CBM (50.3 NPUN/g) having the sequence shown in SEQ ID NO: 2. The enzymes were evaluated in a concentration of 50 NPUN/g potato and the total liquid volume adjusted to 10 ml using 50 mM acetate buffer pH 5.0. For comparison a control was included just adding 10 ml 50 mM acetate buffer pH 5.0. All tests were prepared in duplicate. Debranching was performed at 55°C for 16 hours in a water bath with no stirring. The enzyme was inactivated by heating the samples to 90°C for 10 min. The water was drained and the samples were held (holding time) at 4°C for 24 hours to facilitate the formation of resistant starch. The retrograded samples were manually mashed and the samples were analysed for resistant starch using Megazyme Resistant Starch Assay Procedure K-RSTAR 08/05 (AOAC Method 2002.02 and AACC Method 32-40). The dry solids content was subsequently determined after drying at 105°C.

The results are given below:

| Treatment | Resistant starch (g/100 g potato dry solids) |
|---|---|
| Control | 5.4 |
| SEQ ID NO: 1 | 9.2 |
| Promozyme D2 | 7.7 |
| SEQ ID NO: 2 | 4.2 |
| Promozyme 400L | 6.2 |

Treating blanched potato sticks with pullulanase increased the content of resistant starch significantly in these.

### Example 11

Bintje potatoes (Grill-Kartoflen, Interfrugt Catering, Denmark) were manually peeled and cut into French fries using a French fry cutter (Taglia patate), size 0.8x0.8 cm. The potato sticks (from different potatoes) were divided into portions of 150 g and held in 400 ml de-ionized water until use. The potato sticks were sequentially blanched by dipping in 4L de-ionzed water at 85°C for 4 min and subsequently in 400 ml de-ionized water preheated to 70°C for 15 minutes. Enzyme treatment was done in 300 ml 50 mM acetate buffer pH 5.0 using a pullulanase derived from *Bacillus acidopullulyticus* having the sequence shown in SEQ ID NO: 1 (1600 NPUN/g) at a concentration of 50 NPUN/g potato. For comparison a control in 300 ml 50 mM acetate buffer pH 5.0 without enzyme was included. All tests were prepared in duplicate. Debranching was performed at 55°C for 4 hours in a water bath with no stirring. After enzyme treatment the potato sticks were dried in a ventilated heating cupboard for 10 min at 85°C and parfried in vegetable oil for 1 min at 175°C. The parfried samples were held at 4°C for 24 hours to facilitate the formation of resistant starch. The retrograded samples were manually mashed and analysed for resistant starch using Megazyme Resistant Starch Assay Procedure K-RSTAR 08/05 (AOAC Method 2002.02 and AACC Method 32-40). The dry solids content was subsequently determined after drying at 105°C.

Results are given below:

| Treatment | Resistant starch (g/100 g sample dry solids) |
|---|---|
| Control | 5.94 |
| Pullulanase SEQ ID NO: 1 | 7.51 |

Dry solids after parfrying was 35-36%. Treating blanched potato sticks with pullulanase followed by parfrying increased the content of resistant starch by approx. 26%.

### Example 12

Bintje potatoes (Grill-Kartoflen, Interfrugt Catering, Denmark) were manually peeled and cut into French fries using a French fry cutter (Taglia patate), size 0.8x0.8 cm. The potato sticks (from different potatoes) were divided into portions of 150 g and held in 400 ml de-ionized water until use. The potato sticks were sequentially blanched by dipping in 4L de-ionzed water at 85°C for 4 min and subsequently in 400 ml de-ionized water preheated to 70°C for 15 minutes. Enzyme treatment was done in 300 ml 50 mM acetate buffer pH 5.0 using a pullulanase derived from *Bacillus acidopullulyticus* having the sequence shown in SEQ ID NO:1 (1600 NPUN/g) at a concentration of 50 NPUN/g potato. For comparison a control in 300 ml 50 mM acetate buffer pH 5.0 without enzyme was included. All tests were prepared in duplicate. Debranching was performed at 55°C for 2 hours in a water bath with no stirring. After enzyme treatment the potato sticks were dried in a ventilated heating cupboard for 10 min at 85°C and parfried in vegetable oil for 1 min at 175°C. The parfried samples were held at 4°C for 72 hours to facilitate the formation of resistant starch. The cooled, retrograded potato sticks were second fried 3 min at 175°C in vegetable oil. Afterwards they were manually mashed and analysed for resistant starch using Megazyme Resistant Starch Assay Procedure K-RSTAR 08/05 (AOAC Method 2002.02 and AACC Method 32-40). The dry solids content was subsequently determined after drying at 105°C.

Results are given below:

| Treatment | Resistant starch (g/100 g sample dry solids) |
|---|---|
| Control | 4.37 |
| Pullulanase SEQ ID NO: 1 | 5.40 |

Dry solids after second frying were between 50 and 55%. Treating blanched potato sticks with pullulanase followed by parfrying, cooling (for retrogradation) and second frying increased the content of resistant starch by approx. 24%.

### Example 13

Bintje potatoes (Grill-Kartoflen, Interfrugt Catering, Denmark) were manually peeled and cut into French fries using a French fry cutter (Taglia patate), size 0.8x0.8 cm. The potato sticks (from different potatoes) were divided into portions of 150 g and held in 400 ml de-ionized water until use. The potato sticks were sequentially blanched by dipping in 4L de-ionzed water at 85°C for 4 min and subsequently in 400 ml de-ionized water preheated to 70°C for 15 minutes. Enzyme treatment was done in 300 ml 50 mM acetate buffer pH 5.0 using a pullulanase derived from *Bacillus acidopullulyticus* having the sequence shown in SEQ ID NO:1 (1600 NPUN/g) at a concentration of 50 NPUN/g potato. For comparison a control in 300 ml 50 mM acetate buffer pH 5.0 without enzyme was included. All tests were prepared in duplicate. Debranching was performed at 55°C for 2 or 4 hours in a water bath with no stirring. After enzyme treatment the potato sticks were dried in a ventilated heating cupboard for 10 min at 85°C and parfried in vegetable oil for 1 min at 175°C. The parfried samples were held at 4°C for 48 hours to facilitate the formation of resistant starch. The retrograded samples were baked in the oven for 20 min at 180°C. Afterwards they were manually mashed and analysed for resistant starch using Megazyme Resistant Starch Assay Procedure K-RSTAR 08/05 (AOAC Method 2002.02 and AACC Method 32-40). The dry solids content was subsequently determined after drying at 105°C.

Results are given below:

| Treatment | Incubation time (hrs) | Resistant starch (g/100 g sample dry solids) |
|---|---|---|
| Control | 2 | 3.7 |
| Pullulanase SEQ ID NO: 1 | 2 | 4.7 |
| Control | 4 | 4.5 |
| Pullulanase SEQ ID NO: 1 | 4 | 5.4 |

Dry solids after oven baking was 51 % in average.

Treating blanched potato sticks with pullulanase followed by parfrying, cooling (for retrogradation) and baking in the oven increased the content of resistant starch by 20-27%. Increasing the incubation time increased the content of resistant starch.

## Claims

1. Method for increasing the content of resistant starch in a potato product said method comprising the steps of:
a. providing an aqueous composition comprising a potato pre-product,
b. adjusting the temperature of the composition of step a) to a temperature suitable for enzymatic treatment of the potato pre-product by debranching enzymes,
c. treating the composition with one or more debranching enzymes selected among pullulanase and isoamylase, and
d. holding the enzyme treated potato pre-product at a temperature of between -2 and 50°C.

2. Method according to claim 1 wherein step d) is performed for a time period of between 10 minutes and 20 hours.

3. Method according to any of the preceding claims further comprising an additional step of heating the enzyme treated potato pre-product to a temperature of between 50°C and 90°C.

4. Method according to any of the preceding claims further comprising an additional step of freezing the enzyme treated potato pre-product.

5. Method according to any of the preceding claims wherein an additional step of drying the enzyme treated potato pre-product is performed before step d) and step d) is carried out on a reconstituted dried enzyme treated potato pre-product.

6. Method according to any of claims 1-4 further comprising before step d) an additional step of partially drying of the enzyme treated potato pre-product to a dry matter content of no more than 80%.

7. Method according to any of the preceding claims wherein already retrograded starch is added to the enzyme treated potato pre-product before or during step d).

8. Method according to any of the preceding claims further comprising one or more pre- or post- treatment steps selected from the group comprising cutting, mashing, molding, pressing, frying, deep-frying, par-frying, cooking, bleaching, baking and leaching.

9. Method according to any of the preceding claims wherein the potato product is selected from the group consisting of potato granules, potato flakes, sliced potato chips, fabricated potato chips, extruded potato snacks, ground or crushed dehydrated potato dice and slice pieces, french fries, par-fried potato products, potato croquettes, potato nuggets, industrially pre-cooked potatoes, and mashed potato products such as cooled mashed potatoes and instant mashed potatoes.

10. Method according to any of the preceding claims wherein said debranching enzyme is an isoamylase.

11. Method according to any of the preceding claims wherein said debranching enzyme is a pullulanase.

12. Method according to claim 11 wherein said debranching enzyme is a pullulanase comprising an amino acid sequence which has at least 70% identity with SEQ ID NO: 1 or a fragment thereof.

13. Method according to any of the preceding claims wherein said debranching enzyme is a hybrid polypeptide comprising a catalytic starch debranching domain and a starch binding domain.

14. Method according to any of the preceding claims wherein said debranching enzyme comprises an amino acid sequence which has at least 70% identity with SEQ ID NO: 2.

15. Method according to any of the preceding claims wherein the amount of enzyme used is in the range of 10 microgram EP per ml suspension to 300 microgram EP per ml suspension.

## Patentansprüche

1. Verfahren zum Erhöhen des Gehalts an resistenter Stärke in einem Kartoffelprodukt, wobei das Verfahren die Schritte umfasst:
a. Bereitstellen einer wässrigen Zusammensetzung, die ein Kartoffelvorprodukt umfasst,
b. Einstellen der Temperatur der Zusammensetzung aus Schritt a) auf eine Temperatur, die zur enzymatischen Behandlung des Kartoffelvorprodukts durch Entzweigungsenzyme (debranching enzymes) geeignet ist,
c. Behandeln der Zusammensetzung mit einem oder mehreren Entzweigungsenzymen ausgewählt aus Pullulanase und Isoamylase, und
d. Halten des enzymbehandelten Kartoffelvorprodukts bei einer Temperatur von zwischen -2 und 50 °C.

2. Verfahren nach Anspruch 1, wobei Schritt d) für einen Zeitraum von zwischen 10 Minuten und 20 Stunden durchgeführt wird.

3. Verfahren nach einem beliebigen der vorhergehenden Ansprüche, des Weiteren umfassend einen zusätzlichen Schritt des Erhitzens des enzymbehandelten Kartoffelvorproduktes auf eine Temperatur zwischen 50 °C und 90 °C.

4. Verfahren nach einem beliebigen der vorhergehenden Ansprüche, des Weiteren umfassend einen zusätzlichen Schritt des Gefrierens des enzymbehandelten Kartoffelvorproduktes.

5. Verfahren nach einem beliebigen der vorhergehenden Ansprüche, wobei ein zusätzlicher Schritt des Trocknens des enzymbehandelten Kartoffelvorproduktes vor Schritt d) durchgeführt wird und Schritt d) mit einem rekonstituierten getrockneten enzymbehandelten Kartoffelvorprodukt ausgeführt wird.

6. Verfahren nach einem beliebigen der Ansprüche 1-4, des Weiteren umfassend vor Schritt d) einen zusätzlichen Schritt des teilweise Trocknens des enzymbehandelten Kartoffelvorprodukts auf einen Trockenmassegehalt von nicht mehr als 80%.

7. Verfahren nach einem beliebigen der vorhergehenden Ansprüche, wobei bereits retrograde Stärke zu dem enzymbehandelten Kartoffelvorprodukt vor oder während Schritt d) hinzugefügt wird.

8. Verfahren nach einem beliebigen der vorhergehenden Ansprüche, des Weiteren umfassend einen oder mehrere Vor- oder Nachbehandlungsschritte, ausgewählt aus der Gruppe, umfassend Schneiden, Pürieren, Formen, Pressen, Braten, Frittieren, Vorfrittieren, Kochen, Bleichen, Backen und Auswaschen.

9. Verfahren nach einem beliebigen der vorhergehenden Ansprüche, wobei das Kartoffelprodukt ausgewählt ist aus der Gruppe bestehend aus Kartoffelgranulaten, Kartoffelflocken, geschnittenen Kartoffelchips, verarbeiteten Kartoffelchips, extrudierten Kartoffelsnacks, gemahlenen und zerdrückten dehydrierten Kartoffelwürfel und -scheiben, Pommes Frites, vorfrittierten Kartoffelprodukten, Kartoffelkroketten, Kartoffelnuggets, industriell vorgekochten Kartoffeln, pürierten Kartoffelprodukten, wie gekühlte pürierte Kartoffeln und Instant-Kartoffelpüree.

10. Verfahren nach einem beliebigen der vorhergehenden Ansprüche, wobei das Entzweigungsenzym eine Isoamylase ist.

11. Verfahren nach einem beliebigen der vorhergehenden Ansprüche, wobei das Entzweigungsenzym eine Pullulanase ist.

12. Verfahren nach Anspruch 11, wobei das Entzweigungsenzym eine Pullulanase ist, die eine Aminosäuresequenz umfasst, die mindestens 70% Identität mit SEQ ID NO: 1 oder einem Fragment davon aufweist.

13. Verfahren nach einem beliebigen der vorhergehenden Ansprüche, wobei das Entzweigungsenzym ein Hybridpolypeptid ist, umfassend eine katalytische Stärke entzweigende Domäne und eine Stärke bindende domäne.

14. Verfahren nach einem beliebigen der vorhergehenden Ansprüche, wobei das Entzweigunsgenzym eine Aminosäuresequenz umfasst, die mindestens 70% Identität mit SEQ ID NO: 2 aufweist.

15. Verfahren nach einem beliebigen der vorhergehenden Ansprüche, wobei die Menge an verwendetem Enzym im Bereich von 10 Mikrogramm EP pro ml Suspension bis 300 Mikrogramm EP pro ml Suspension liegt.

## Revendications

1. Procédé pour augmenter la teneur d'amidon résistant dans un produit à base de pommes de terre, ledit procédé comprenant les étapes de :
a. préparation d'une composition aqueuse comprenant un pré-produit à base de pommes de terre,
b. ajustement de la température de la composition de l'étape a) à une température convenable pour le traitement enzymatique du pré-produit à base de pommes de terre par des enzymes déramifiantes,
c. traitement de la composition avec une ou plusieurs enzymes déramifiantes choisies parmi la pullulanase et l'isoamylase, et
d. maintien du pré-produit à base de pommes de terre traité par voie enzymatique à une température entre -2 et 50 °C.

2. Procédé selon la revendication 1, dans lequel l'étape d) est mise en oeuvre pendant une période de temps comprise entre 10 minutes et 20 heures.

3. Procédé selon l'une quelconque des revendications précédentes, comprenant en outre une étape supplémentaire de chauffage du pré-produit à base de pommes de terre traité par voie enzymatique à une température comprise entre 50 et 90 °C.

4. Procédé selon l'une quelconque des revendications précédentes, comprenant en outre une étape supplémentaire de congélation du pré-produit à base de pommes de terre traité par voie enzymatique.

5. Procédé selon l'une quelconque des revendications précédentes, dans lequel une étape supplémentaire de séchage du pré-produit à base de pommes de terre traité par voie enzymatique est réalisée avant l'étape d) et l'étape d) est mise en oeuvre sur un pré-produit à base de pommes de terre traité par voie enzymatique séché et reconstitué.

6. Procédé selon l'une quelconque des revendications 1 à 4, comprenant en outre avant l'étape d), une étape supplémentaire de séchage partiel du pré-produit à base de pommes de terre traité par voie enzymatique jusqu'à une teneur en matières sèches n'excédant pas 80 %.

7. Procédé selon l'une quelconque des revendications précédentes, dans lequel un amidon déjà rétrogradé est ajouté au pré-produit à base de pommes de terre traité par voie enzymatique avant ou pendant l'étape d).

8. Procédé selon l'une quelconque des revendications précédentes, comprenant en outre une ou plusieurs étapes de pré- ou de post-traitement choisies dans le groupe comprenant le découpe, l'écrasement, le moulage, la pressage, la friture, la friture à coeur, la friture partielle, la cuisson, le blanchiment, le cuisson au four et le lessivage.

9. Procédé selon l'une quelconque des revendications précédentes, dans lequel le produit à base de pommes de terre est choisi dans le groupe constitué par les granulés de pommes de terre, les flocons de pommes de terre, les chips de pommes de terre en tranches, les chips de pommes de terre fabriqués, les croustilles de pommes de terre extrudées, les dés et les tranches de pommes de terre déshydratés broyés ou concassés, les frites, les produits à base de pommes de terre partiellement frits, les croquettes de pommes de terre, les nuggets de pommes de terre, les pommes de terre industriellement précuites, et les produits à base de purée de pommes de terre tels que les purées refroidies et les purées instantanées.

10. Procédé selon l'une quelconque des revendications précédentes, dans lequel ladite enzyme déramifiante est une isoamylase.

11. Procédé selon l'une quelconque des revendications précédentes, dans lequel ladite enzyme déramifiante est une pullulanase.

12. Procédé selon la revendication 11, dans lequel ladite enzyme déramifiante est une pullulanase comprenant une séquence d'acides aminés présentant une identité d'au moins 70 % avec SEQ ID N°: 1 ou un fragment de celle-ci.

13. Procédé selon l'une quelconque des revendications précédentes, dans lequel ladite enzyme déramifiante est un polypeptide hybride comprenant un domaine déramifiant d'amidon catalytique et un domaine de liaison à l'amidon.

14. Procédé selon l'une quelconque des revendications précédentes, dans lequel ladite enzyme déramifiante comprend une séquence d'acides aminés présentant une identité d'au moins 70 % avec SEQ ID N°: 2.

15. Procédé selon l'une quelconque des revendications précédentes, dans lequel la quantité d'enzyme utilisée est dans la plage de 10 à 300 microgrammes EP par ml de suspension.
